# EUROPEAN PATENT SPECIFICATION

(11) **EP 2 989 940 B1**
(45) Date of publication and mention of the grant of the patent: **22.03.2017**
(21) Application number: 14183081.0
(22) Date of filing: 01.09.2014
(51) Int. Cl.: A47J 27/62, F24C 7/08

(54) **MULTI-FUNCTION COOKING APPARATUS WITH RECIPE CONTROL**
MULTIFUNKTIONELLE KOCHVORRICHTUNG MIT REZEPTSTEUERUNG
APPAREIL DE CUISSON MULTIFONCTION AVEC COMMANDE DE RECETTE

(43) Date of publication of application: 02.03.2016
(73) Proprietor: Vorwerk & Co. Interholding GmbH, 42275 Wuppertal (DE)
(72) Inventor: Lang, Torsten, 42657 Solingen (DE); Weber, Klaus-Martin, 42109 Wuppertal (DE); Kraut-Reinkober, Stefan, 51381 Leverkusen (DE); Schonmacher, Jutta, 42489 Wülfrath (DE); Könnings, Maximilian, 8032 Zürich (CH); Resende, Maria, 8832 Wollerau (CH)
(74) Representative: Bittner, Peter

(56) References cited:
- EP-A1- 2 031 306
- WO-A2-2009/026891
- DE-A1- 19 718 399
- DE-A1-102012 217 004

## Description

### Technical Field

The present invention generally relates to a cooking apparatus, and more particularly, relates to security/safety functions of the cooking apparatus.

### Background

Cooking apparatuses or devices have become more and more intelligent in the recent past by integrating multiple functions into the apparatus. For example, modern cooking devices integrate functions, such as heating, mixing, boiling, pureeing, etc., in a single multi-function cooking device. However, a cooking device typically has to be operated with appropriate technical parameter settings (e.g., temperature settings, rotational speed settings, etc.) to ensure proper operation. Proper operation of a cooking device as used hereinafter refers to correct, safe and/or secure operation. For example, a rotational speed parameter for controlling the rotation of a stirring unit of the cooking device may be too high which may result in overheating and damaging the motor of the stirring unit or which may cause vibrations to the cooking apparatus so that the apparatus moves and may get damaged. Another example is a wrong heat control parameter which may even set fire to the apparatus or at least prevent a successful cooking process on the basis of such a wrong technical parameter. Another example is a dangerous combination of a hot liquid, which was heated by the device, and a pulsed stirring mode at high speed (e.g., Turbo Mode) which may lead to spilling the hot liquid out of the device and may result in serious injury of the user (cook).

Some multi-function cooking devices support automated or semi-automated cooking on the basis of digital recipes which provide technical parameter settings directly to the cooking device. However, a digital recipe may include incompatible or even malicious technical parameter settings which are inappropriate to be processed by the cooking apparatus while at the same time guaranteeing proper execution of the (semi-) automated cooking procedure based on the digital recipe. For example, the digital recipe may be compromised by using a Wi-Fi interface of the cooking device. Through a "Man in the Middle Attack" a potential attacker can manipulate the technical parameters between the storage device for the digital recipes and the cooking device. The German patent application DE102012217004 discloses a method for creating a menu. A data processing device provides a selection of menus. Then a configuration and parameterization of the menus is provided. Then a shopping list for the ingredients of the menus is created. The menus are then transmitted to a cooking apparatus which finally provides the possibility to assess the menus. The cooking apparatus can automatically control the cooking of food products by using a program control mechanism. In step (d) of the method the configured and parameterized menu is transmitted to the cooking device. This includes the transmission of control parameters to the cooking apparatus. That is, after this step (d) all information which is required to perform the cooking method has already been received by the cooking apparatus. After the transmission of the menu in step (d) the cooking apparatus performs steps for monitoring the status of the cooking method occurs while the cooking method is executed. After the transmission of the menu, in a further step, the cooking device can check the plausibility of the received menu data. Based on the results of the plausibility check the cooking device can reject the execution of an already loaded menu.

There is therefore a need to improve a cooking apparatus in that it ensures proper operation when provided with technical parameter settings by digital recipes also referred to as recipe programs hereinafter.

### Summary

There is a need to improve multi-function cooking apparatuses providing at least semi-automated cooking support by processing recipe programs in that they ensure proper operation. In cases where the execution of the recipe program would lead to a malfunctioning of the cooking apparatus and harm the cooking apparatus itself or a cooking user of the cooking apparatus the loading and execution of the recipe program is prevented. On the one hand, recipe programs can include unintentional harmful technical parameter settings for the cooking apparatus, for example, because a typing error in the recipe program was not discovered during the development phase of the recipe program or a production step a recipe collection (e.g., creating a digital copy) leads to a partial corruption of the recipe program which again may lead to a wrong interpretation of technical parameter settings for the cooking apparatus. On the other hand, malicious recipe programs may intentionally be developed to sabotage or compromise a cooking apparatus in a similar way as computer viruses can affect general purpose computers (e.g., laptops, table PCs, personal computers, etc.). However, in both scenarios there is an increased risk to create personal damage or injury of the cooking user. For example, wrong technical parameter settings for the cooking apparatus can result in spilling hot cooking ingredients (e.g., boiling water or hot oil) out of the apparatus and hurt the cooking user who is taken by surprise because he/she relied on the proper operation of the cooking apparatus whose functions are controlled by the executed recipe program. In other words, there is therefore a need to enable the cooking apparatus to prevent recipe programs from causing malicious or safety harming behavior of the cooking apparatus. Such technical problems are solved by embodiments of the invention as disclosed in the independent claims.

In one embodiment, a cooking apparatus for at least semi-automated cooking support is disclosed. Semi-automated cooking support in the context of this disclosure means that at least some of the cooking steps for preparing a meal with the cooking apparatus can be automatically executed by the cooking apparatus by executing a particular recipe program for the meal. However, there may also be some cooking steps that require user interaction, such as for example, filling the cooking apparatus with particular ingredients. Technical parameter settings of the recipe program can automatically control corresponding cooking functions of the cooking apparatus. For example, a temperature parameter setting can control the temperature of the cooking apparatus. A rotational speed parameter setting can control the rotational speed at which one or more rotatable components of the cooking apparatus rotate. More complex technical parameter settings can allow defining dependencies between technical parameters of different types to control cooking steps. For example, ingredients are stirred until a certain consistency is reached. In this example, the rotational speed is controlled dependent on the consistency of the ingredients. For example, the consistency can be determined based on the electrical conductivity as described in the patent application DE102012220996. Dependent on the cooking functions supported by the cooking apparatus the respective technical parameter settings in the recipe program can be interpreted by a process control component of the cooking apparatus and the be applied to the control hardware implementing the cooking function. Examples of basic cooking functions which can be supported by a multi-function cooking apparatus include but are not limited to weighing, mixing, crushing, milling, kneading, controlled heating, cooking, beating, stirring, emulsifying, and steaming. Each basic cooking function can be executed by a dedicated hardware component. Some basic cooking functions may use the same hardware component (e.g., a motor used for mixing, crushing and stirring, or a heater for controlled heating and steaming). Basic cooking functions may be performed in parallel when using different hardware components. Examples of technical parameter settings which can be included in a recipe program include but are not limited to cooking time (for one or more cooking steps), rotational speed of a motor of the cooking apparatus (e.g., for stirring or mixing functions), rotational direction of the motor, motor mode, heat control, and pulse mode. The part of a particular recipe program which includes a plurality of control instructions with at least one technical parameter setting to control cooking steps performed by the cooking apparatus in case of executing the control instructions is referred to as control portion hereinafter.

The cooking apparatus has an interface component (e.g., a Universal Serial Bus (USB) interface, a Local Area Network (LAN) interface) which allows accessing a plurality of recipe programs on a data storage device communicatively coupled with the cooking apparatus through the interface component. The data storage device can be a movable device, such as for example, a USB device (e.g., a USB stick or USB drive), a SD card, an optical data storage carrier (e.g., a CD, DVD or Blu-ray Disc), or any other appropriate data storage device for storing recipe programs. Recipe programs may be stored in a database on the data storage device or in a file system or in any other appropriate data storage structure format.

Further, the cooking apparatus has at least one memory component to load the control portion of a recipe program from the data storage device for executing. That is, the memory of the cooking apparatus has a load memory portion which is used to store the program code of the control portion of the particular recipe program. One or more processor components of the cooking apparatus can execute the control portion when loaded in the load memory portion. The processor component includes an interpreter to interpret the control instructions of the recipe program and includes processor hardware to execute the interpreted control instructions. Executing the control instructions results in triggering a respective cooking function by invoking a corresponding cooking hardware component, such as the motor or a heating coil or digital scales.

Further, the cooking apparatus includes a technical parameter storage component to store compatible technical parameter setting rules (CTPSR) wherein a compatible technical parameter setting ensures proper operation of the cooking apparatus. For example, the CTPSR can be implemented in a rule database stored in a dedicated memory portion of the cooking apparatus. It may also be implemented as a lookup table or other appropriate data formats. Examples are given in the detailed description.

Further, the cooking apparatus has a parameter check component. The parameter check component can be implemented as a software program which is executed by a processor of the cooking apparatus or it can be implemented as a digital hardware circuit which is designed to perform the following functions. The parameter check component can prevent loading of the control portion into the load memory portion of the memory component if the control instructions include at least one particular technical parameter setting which is incompatible with the compatible technical parameter setting rules. In other words, if the recipe program to be executed by the cooking apparatus includes at least one technical parameter settings which is not compliant with the requirements defined by the CTPSR the check component prevents the respective control portion to be loaded into the memory portion for executable recipe program parts. If however all technical parameter settings of the plurality of control instructions are in compliance with the compatible technical parameter setting rules, the parameter check component triggers loading of the control portion into the load memory portion for executing.

That is, the parameter check component ensures that any harmful or malicious control portion of a recipe program cannot be executed by the cooking apparatus at all because no executable program code would be available for the processing component. This prevents any possibility of attacking the cooking apparatus by injecting harmful technical parameter settings into the executable load memory portion. Further, checking the technical parameter settings compliance before loading and executing the recipe program avoids a situation where the user starts executing a recipe program which would be interrupted later on or even result in a hazardous situation.

In one embodiment, the parameter check component can read control instructions of the control portion stepwise from the storage component, and then apply the compatible technical parameter setting rules to the previously read control instructions after each control instruction reading step. The term previously read control instructions is meant to also include the currently read control instruction. Reading control instructions stepwise means reading the instructions sequentially one by one. After each reading step the CTPSR is applied to the last read (current) control instruction. To handle complex compatible technical parameter setting rules which combine multiple technical parameter settings of different types (e.g., temperature settings and motor mode settings) it can be advantageous to apply the CTPSR to all previously read control instructions. For example, the last read control instruction may include a rotational speed parameter setting which on its own is not harmful. However, previously read control instructions may relate to a temperature setting of a particular ingredient which in combination with the rotational speed parameter setting is not compatible with a complex CTPSR. Therefore, it can be advantageous to buffer all previously read control instructions in a read memory portion of the memory component which is isolated from the load memory portion to avoid unintended execution. Finally, the parameter check component can prevent loading the control portion into the load memory portion if the previously read control instructions include at least one particular technical parameter setting which is incompatible with the compatible technical parameter setting rules CTPSR. In the stepwise reading embodiment, the parameter check component can immediately abort the checking procedure when the first incompatibility with the CTPSR occurs. It is therefore not necessary to read all control instructions of the control portion. Therefore, the response time of the cooking apparatus is improved when the user tries to execute a recipe program with incompatible technical parameter settings and the user can quickly turn to another recipe program. Complex compatible technical parameter setting rules can also be used in embodiments not using a step wise reading approach. For example, code instructions could be read block wise with predefined block size(s). Then the complex rules can be applied to the respective available blocks of code instructions.

In one embodiment, the cooking apparatus includes a user interface (Ul) component which supports the user in selecting recipe programs from the data storage component. In this embodiment, a recipe program further has an overview portion which does not include any executable control instructions but information content about the recipe which can be useful for the user to make a choice for a particular recipe program. The UI component can initiate retrieval of the overview portion(s) of one or more recipe programs and output the content of the overview portion to the cooking user. For example, the content (audio and/or video) can be displayed on display means of the cooking apparatus (e.g., a passive or active (touch) display integrated in the cooking apparatus) with optional loudspeakers. Any other appropriate form of presentation of the content to the user can be used. The Ul component may also interface with external I/O means like a smartphone or a tablet PC to convey the content of the overview portion to the user. The Ul component can prompt the cooking user to select a particular recipe program for execution of the control portion. For example, the Ul component can show to the user a list of headers of alternative recipe programs which are available on the data storage component. The user may select one of the shown headers (e.g., by touching or clicking on a respective UI element) to indicate the intention to execute the control portion of the recipe program associated with the selected overview portion. After the selection the previously explained parameter check component is activated and performs the previously described technical parameter settings compliance test. If the control instructions of the selected recipe program include at least one particular technical parameter setting which is incompatible with the compatible technical parameter setting rules, the Ul component can deactivate the particular recipe program selection. For example, the respective overview portion may be grayed out or active layout elements (e.g., buttons) are set inactive to notify the user that the selected recipe program is not executable on the cooking apparatus. In one embodiment, the Ul component can generate a corresponding error message for the user.

Further embodiments of the invention relate to a method for controlling recipe execution on a multi-function cooking apparatus and a computer program product having computer program instructions which when being loaded into a memory of a cooking apparatus and being executed by at least one processor of the cooking apparatus cause the at least one processor to execute the steps of the method.

The method includes the steps: accessing a plurality of recipe programs on a storage device wherein a particular recipe program has a control portion with a plurality of control instructions including at least one technical parameter setting to control cooking steps performed by the cooking apparatus in case of executing the control portion; applying compatible technical parameter setting rules to the control instructions wherein a compatible technical parameter setting ensures proper operation of the cooking apparatus; preventing loading of the control portion into a load memory portion of a memory component of the cooking apparatus, if the control instructions include at least one particular technical parameter setting which is incompatible with the compatible technical parameter setting rules; and loading of the control portion into the load memory portion for executing by a processor component of the cooking apparatus, if all technical parameter settings of the plurality of control instructions are in compliance with the compatible technical parameter setting rules.

In one embodiment, the method further includes: stepwise reading control instructions of the control portion from the storage component; after each control instruction reading step, applying the compatible technical parameter setting rules to the previously read control instructions; and preventing loading the control portion into the load memory portion if the previously read control instructions include at least one particular technical parameter setting which is incompatible with the compatible technical parameter setting rules.

In a further embodiment, the computer program instructions may be stored on a computer readable medium forming a computer program product.

Further aspects of the invention will be realized and attained by means of the elements and combinations particularly depicted in the appended claims. It is to be understood that both the foregoing general description and the following detailed description are exemplary and explanatory only, and are not restrictive of the invention as described.

### Brief Description of the Drawings

FIG. 1 is a simplified component diagram of a multi-function cooking apparatus for at least semi-automated cooking support according to one embodiment of the invention;
FIG. 2 is a simplified flow chart of a method for machine controlled recipe execution on the multi-function cooking apparatus according to one embodiment of the invention;
FIG. 3 is a simplified flow chart of a further method for controlling recipe execution on the multi-function cooking apparatus according to a further embodiment of the invention;
FIGs. 4A, 4B show a user interface in two different states to enable interaction between the cooking apparatus and a user according to one embodiment of the invention;
FIG. 5 is a simplified example of digital recipe control portions leading to different parameter check results according to one embodiment of the invention; and
FIG. 6 is a diagram that shows an example of a generic computer device and a generic mobile computer device, which may be used in embodiments of the invention.

### Detailed Description

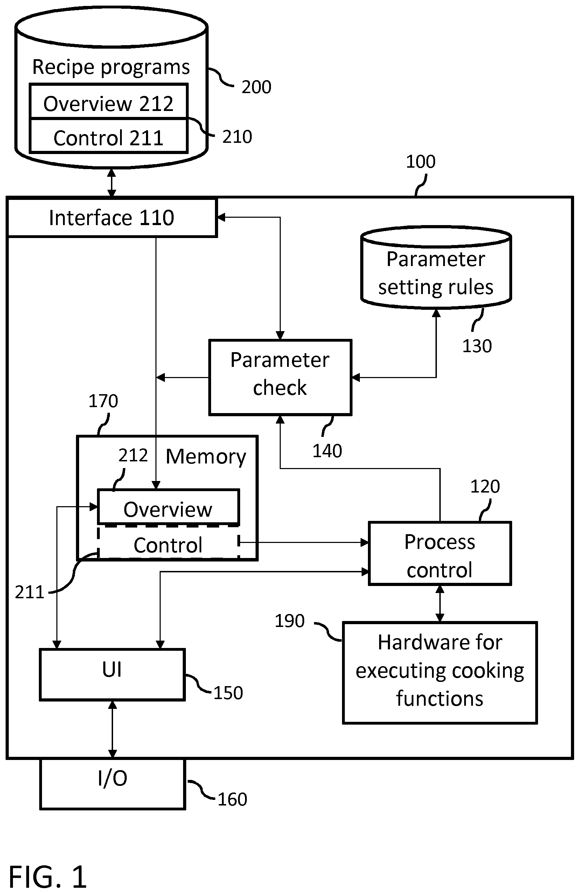

FIG. 1 is a simplified component diagram of a multi-function cooking apparatus 100 for at least semi-automated cooking support according to one embodiment of the invention.

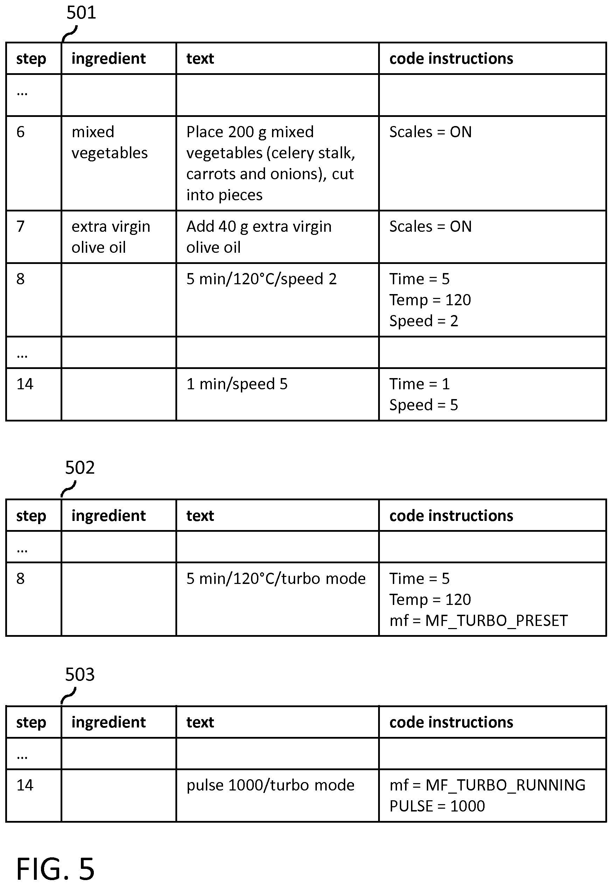

The cooking apparatus 100 is communicatively coupled with a data storage device 200 via an interface component 110. The interface 110 can be any interface supporting the exchange of data between the data storage device 200 and the cooking apparatus 100. For example, a serial interface (e.g., a USB interface) or a parallel interface (e.g., an IEEE 1284 interface) may be used. The data storage device can be any device with a memory for storing structured data. The data storage device may have a database or a file system to store recipe programs which are intended to be executed by the cooking apparatus. A recipe program example is disclosed in the context of FIG. 5. A recipe program 210 is a digital recipe which includes a plurality of control instructions with at least one technical parameter setting to control cooking steps of functions performed by the cooking apparatus 100 when the recipe program is executed by a process control component 120 of the cooking apparatus. The plurality of control instructions is also referred to as the control portion 211 of the recipe program. The cooking apparatus 100 has a memory component 170 which can have various memory portions for different purposes. One memory portion also referred to as the load portion can load the control portion 211 of a particular recipe program 210 via the interface 110 from the data storage 200 and serve as memory for control instructions to be executed by the process control component 120. The process control component 120 can include an interpreter for interpreting the control instructions. The basic cooking functions are then performed by respective hardware 190 (e.g., motor, heating means, scales, etc.) of the cooking apparatus under the control of the process control component 120. Basic cooking functions using different hardware may be performed in parallel (e.g., heating and stirring). That is, the process control component 120 transforms the control instructions of the control portion into control signals applied to the hardware components 190. A person skilled in the art can build a corresponding interpreter for this purpose. Persons of skill in the art can implement the mapping of instructions to control signals otherwise, for example, by using instructions in so-called machine-code that control the hardware components directly.

In some embodiments, the particular recipe program 210 can further include an overview portion 212 which includes cognitive content about the recipe for a user of the cooking apparatus. For example, the overview portion can include a digital picture or video of the meal or its preparation steps which result from executing the control portion of the recipe program. It may also include a description about the meal including a list of beverages which may be served with the meal or any other interesting information regarding the meal (e.g., the history of the meal, the country of origin, etc.) The overview portion can also be loaded via the interface 110 into the memory of the cooking apparatus. It may be stored in a different memory portion separated from the load portion because it does include executable code (control instructions). The content of the overview portion 212 can be presented to the user by using the Ul component 150 through the appropriate output of input/output (I/O) means 160 (e.g., display, loudspeaker, earphones, etc.). The I/O means 160 can be an integral part of the cooking apparatus. For example, the cooking apparatus may have a touch screen to display information and serve at the same time as a data input means for the user. The cooking apparatus may also have further input means, such as keys or buttons or a microphone for collecting voice commands. Instead of integrated I/O means 160 the cooking apparatus may be communicatively coupled to "external" I/O means, such as for example a smartphone or a tablet PC, which may be used for conveying the content of the overview portion to the user and which may be used to receiving input from the user. The cooking apparatus can load one or more overview portions from one or more recipe programs from the data storage 200 and also present the content of multiple overview portions simultaneously to the user. This allows the cooking apparatus to prompt the user with a list of available recipes and receive a selection for a particular recipe 210 from the user by interacting with the cooking apparatus at the level of the overview portion 212 through the Ul component 150. For example, the user may select the particular recipe program 210 by touching on the presented content of the overview portion 212 which indicates to the process control component 120 that the user wants to execute the control portion 211 of the recipe program 210. The process control component 210 can then initiate the loading through the parameter check component 140.

Other methods of selecting a recipe program for execution are possible. For example, a fixed cooking plan (e.g., a weekly or monthly plan) may be stored in the cooking apparatus which does not require the type of user interaction as described previously. In such an embodiment, the process control component 120 can automatically initiate loading of the control portion 211 through the parameter check component 140 when the planned start time for the respective recipe is reached.

Independent of the selection method, the control portion 211 of the recipe program cannot be loaded automatically into the load memory portion without performing a check regarding the compliance of the control portion 211 with the technical constraints of the cooking apparatus. This security function ensures that no malicious control instructions can be loaded into the load portion of the memory component. Malicious control instructions are control instructions which include technical parameter settings for the cooking apparatus which may cause damage to the cooking apparatus or to its user(s). To perform such checks the parameter check component 140 can use compatible technical parameter setting rules CTPSR 130 which are stored in the cooking apparatus. The CTPSR include such technical parameter settings which are allowed for the cooking apparatus to ensure proper operation. In other words, the CTPSR 130 includes rules indicating valid technical parameter settings which are accepted by the cooking apparatus because they are within the normal operation tolerances of the cooking apparatus and will not cause a malfunctioning of the apparatus. For example, valid temperature settings may be 0, 37, 40, 45, 50, 55, 60, 65, 70, 72, 75, 80, 85, 90, 95, 98, 100, 105, 110, 115, 120, 121 (e.g., degrees Celsius), valid time settings may be between 00:00 and 99:59 (e.g., hours:seconds), valid rotational speed settings may be between 0.0 and 10.0 (e.g., revolutions per second) in steps of 0.5 and additionally soft (e.g., 0.1, 0.2 and 0.3), motor mode settings may be normal, turbo preset, turbo running, dough preset, dough running and automated recipe, valid rotational direction settings can be left or right, and, for example, valid turbo pulse time intervals may be 500ms, 1000ms, or 2000ms. For example, a valid turbo pulse count can be between 1 and 10. The various turbo modes can be characterized through rotational speeds which exceed the normally allowed maximum rotational speed for relatively short time intervals (turbo pulse). For example, the allowed maximum rotational speed may be in the range of 7000 to 9000 revolutions per minute whereas the various turbo pulse modes may be associated with rotational speeds above 10000 revolutions per minute during the allowed turbo pulse time intervals. There can be additional CTPSR rules defining constraints for certain combinations of technical parameters. For example, when the temperature exceeds 80°C the motor must not be switched to a turbo mode increasing the rotational speed. Such rules combining multiple technical parameter settings of different types are also referred to as complex parameter rules. In one embodiment, the rules can be implemented in a hierarchical structure. For example, first level rules may be used to define independent ranges for respective technical parameters. Such a range defines a tolerance interval for an individual technical parameter which is allowed for the cooking apparatus by not taking into account potential conflicts with parameter settings of other parameter types. First level rules can be applied to an individual technical parameter setting, for example, in a single control instruction. Second level rules (e.g., complex rules) can define allowed dependencies between parameter settings of different types and the consequences for the respective control step. Higher levels of complexity (e.g., multi-dependencies between multiple parameter types) can be implemented in further levels of the hierarchical rule structure. Second level or higher level rules can be applied to multiple technical parameter settings which may be spread over multiple control instructions. A detailed example is disclosed in the context of FIG. 5.

The parameter check component 140 can read control instructions of the control portion 211 of the selected recipe program 210 from the recipe data storage 200 through the interface 110 and then check if the control instructions comply with the allowed technical parameter settings as defined by CTPSR 130. If the technical parameter settings of the control portion 211 fall within the allowed technical parameter settings the control portion 211 is loaded into the load memory portion from where it can be executed by the process control component 120. However, if the parameter check component identifies in the control portion 211 technical parameter settings which are in conflict with the allowed technical parameter settings, the parameter check component prevents the loading of the control portion into the load memory. As a consequence, it is not possible to inject malicious code into the executable load memory portion. Therefore, the parameter check component 140 ensures that control instructions of recipe programs can get loaded and executed on the cooking apparatus only if they guarantee proper operation of the apparatus.

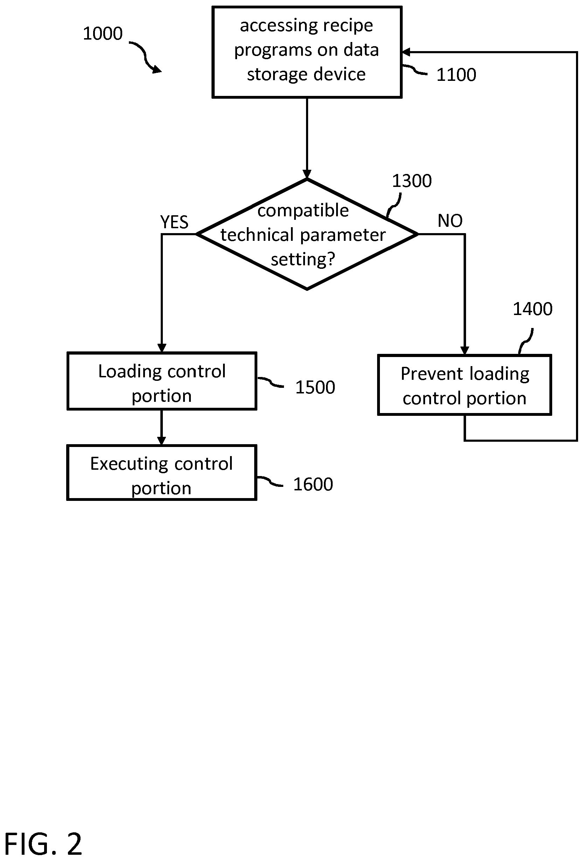

FIG. 2 is a simplified flow chart of a computer implemented method 1000 for controlling recipe execution on the multi-function cooking apparatus according to one embodiment of the invention. The method can be executed by the components of the cooking apparatus as disclosed in the context of FIG. 1. The steps of the method 1000 performed by the cooking apparatus are disclosed in the following.

The cooking apparatus accesses 1100 a plurality of recipe programs on a data storage device wherein a particular recipe program comprises a control portion having a plurality of control instructions with at least one technical parameter setting to control cooking steps performed by the cooking apparatus in case of executing the control portion. The cooking apparatus then applies 1300 compatible technical parameter setting rules to the control instructions. Such technical parameter setting rules differentiate the control instructions into compatible instructions and incompatible instructions. A compatible technical parameter setting ensures proper operation of the cooking apparatus. If the control instructions include at least one particular technical parameter setting which is incompatible with the compatible technical parameter setting rules, the cooking apparatus prevents 1400 loading of the control portion into a load memory portion of a memory component of the cooking apparatus. In this case the cooking apparatus can continue with the accessing step 1100 and proceed with checking the next recipe program according to the applying step 1300. Applying the CTPSR to the control portion can include the check of a single technical parameter setting in one control instruction but it may also relate to complex technical parameter settings where only certain combinations of technical parameter settings are allowed or compatible with the technical constraints of the cooking apparatus. Complex technical parameter settings may occur in a single control instruction or may be distributed across multiple control instructions. For example, a control instruction may increase the temperature to 80 degrees and at the same time speed up the motor to 4 revolutions per second. The same technical parameter settings may also be included in two different control instructions which may even separate by a plurality of other control instructions. However, also in such a situation the parameter check component of the cooking apparatus recognizes the respective pattern in the control portion by applying the CTPSR and can make a decision if the complex parameter setting is compliant (compatible) with the constraints of the cooking apparatus as defined in the CTPSR. If all technical parameter settings of the plurality of control instructions are in compliance with the compatible technical parameter setting rules the cooking apparatus can be sure that proper operation is not taken at risk by the checked recipe program and proceeds with loading 1500 the control portion into the load memory portion. Once being loaded the control portion is executed 1600 by the processor component of the cooking apparatus instructing the hardware components of the cooking apparatus to perform cooking functions according to the recipe program.

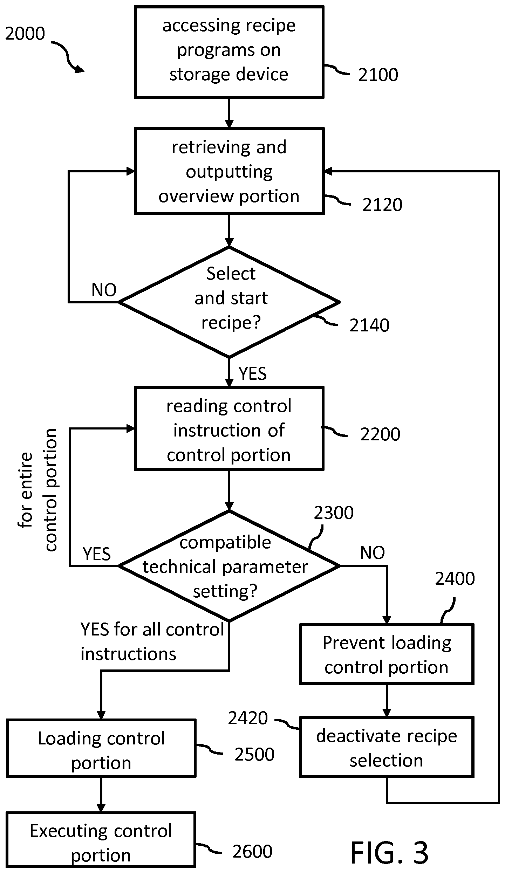

FIG. 3 is a simplified flow chart of a further method 2000 for controlling recipe execution on the multi-function cooking apparatus according to a further optional embodiment of the invention. Besides the steps 2100, 2300, 2400, 2500, and 2600 which substantially correspond to the steps 1100, 1300, 1400, 1500, and 1600 of the previously disclosed method 1000, the method 2000 further includes optional steps. However, implementation details of the steps 2100, 2300, 2400, 2500, and 2600 may deviate as a consequence of optional steps added to the previously disclosed method 1000.

When the cooking apparatus is connected to the data storage device it can access 2100 all recipe programs stored thereon. For example, the cooking apparatus can initiate 2120 retrieval of an identifier for every recipe program and the then retrieve the overview portions of the stored recipe programs associated with the identifiers and output the content of the overview portions to the user. This function may be implemented with the Ul and I/O components as disclosed with FIG. 1. For example, the user may receive a list of available recipe programs. The UI component may provide filter functions for the user to select only a sub-set of the stored recipe programs. For example, filter functions may allow retrieving and/or outputting only overview portions of recipe programs in certain categories (e.g., Italian, vegetarian, sports, Christmas, etc.). The user can then be prompted 2140 with a corresponding list of overview portion contents and select any one of the outputted overview portions to indicate the intention to execute the respective control portion. If none of the outputted overview portions is meeting the user's expectations, the user may simply request output of the next page or change the filter settings to retrieve a new subset of recipe overview portions from the data storage. If the user identifies a recipe fulfilling the expectations and wants to execute the recipe program the user can make the selection by using any standard interactive selection mechanism (e.g., ticking a check box, clicking on a hyper link or button, double clicking on a list entry, etc.).

Upon receipt of the user's selection the parameter check component of the cooking apparatus starts to read 2200 the control instructions of the control portion of the selected recipe program. Advantageously, a dedicated read memory portion of the memory component is used which is isolated from the load memory portion to avoid any possibility of injecting unchecked control instructions into the executable load memory portion. In one embodiment, the reading step 2200 is performed as a step wise reading step where the control instructions of the control portion are consecutively read one by one and each control instruction is checked with the CTPSR upon being read before the next control instruction is read. That is, each control instruction is immediately being checked 2300 when being read and the checking process can be aborted immediately once an incompatible technical parameter setting in the just read control instruction is recognized by applying 2300 the CTPSR. For recognizing complex technical parameter settings spread over multiple control instructions it is advantageous to use a read buffer for buffering all previously read control instructions and to apply 2300 the CTPSR to the content of the whole buffer.

In case the previously read control instructions include at least one particular technical parameter setting which is incompatible with the compatible technical parameter setting rules the parameter check component prevents 2400 loading of the control portion into the load memory portion. Substantially at the same time (shortly before or after the prevent step 2400), the UI component can deactivate 2420 the recipe selection option for the user to indicate that the selected recipe is not executable on the cooking apparatus. For example, a respective selection button (e.g., start button) is grayed out or animated (e.g. red blinking) to notify the rejection of the recipe program to the user. Instead or additionally a corresponding error message can be output to the user. The process control can then lead the user back to the selection screen with the list of overview portion presentations. Alternatively, if the user showed some food preferences through specific filter criteria used for the recipe selection the cooking apparatus can make a proposal for a similar recipe program based on the used filter criteria.

The immediate abortion of the check procedure and the notification of the user in case of an incompatible technical parameter setting can provide multiple advantages. The check time is reduced to the minimum time necessary. Therefore, the response time of the system towards the user regarding the rejection of selected recipe program is reduced. The memory consumption in the read buffer is kept to a minimum. Further potentially malicious control instructions are not even read by the parameter check component (i.e. not retrieved from the data storage device by the cooking apparatus).

The following pseudo code portions illustrate commands which can be used in a specific embodiment of the stepwise reading 2200 and checking 2300 procedure, upon user selection after being prompted 2140:
1) Load Overview Portion (the cooking apparatus queries the data storage device for the various information pieces which make up the overview portion, such as for example, the number of recipe steps, the recipe name, etc.)

   ```
 -SQLQueries::GetNumberOfSteps
 -SQLQueries::GetRecipeName
 -SQLQueries::HasRecipeGuidedCookingInformation
 -SQLQueries::GetTotalTime
 -SQLQueries::GetPreparationTime
 -SQLQueries::GetDifficultyString
 -SQLQueries::IsFavourite
```
2) IngredientList (the list of ingredients and the required quantities can be part of the overview content presented to the user. The system may also suggest alternative variants to replace one ingredient with another one)

   ```
 -SQLQueries::GetIngredients
 -SQLQueries::GetServeQuantity
 -SQLQueries::GetSteps
 -SQLQueries::GetTip
 -SQLQueries::GetVariant
 -SQLQueries::IsFavourite
```
3) Load Control Portion (When initiated by the user through user interaction the cooking apparatus first retrieves structure information about the control portion. The structure information including the number of cooking steps/control instructions allows the cooking apparatus to compute the number of reading steps required for the stepwise reading procedure)

   ```
 - SQLQueries::GetRecipeStepSkeleton (GetList of steps and types)
```
4) Get Step Information for all guided steps (The respective instructions may include multiple data portions which can be retrieved through the following example query/reading steps.)

   ```
 -SQLQueries::GetUtensil
 -SQLQueries::GetUtensil
 -GetFreetext
 -GetFreetext
 -SQLQueries::GetIngredient
 ... (multiple times)
 -SQLQueries::GetUtensil
 -SQLQueries::GetCtrl
 --> Afterwards check the settings of the read Ctrl Data (That is,
 for each control instruction the parameter check component applies
 the CTPSR)
 - CTmCtrlStep::CheckSettings()
 ... continues for additional steps.
```

For example, there may be multiple GetUtensil steps which relate to recipe information not directly related to steps performed by the cooking apparatus (e.g., "preheating an external oven" or "shaping the dough"). Further, GetFreetext. Querying GetCtrl steps retrieves the code instructions from the control portion of the recipe program. If applying the CTPSR CTmCtrlStep: : CheckSettings () returns "false", an exception can be thrown which cancels the reading of the recipe steps (control instructions), clears the reading buffer, prevents loading of the control portion into the load memory portions and stays at the recipe overview presentation view for the user where the start function is now deactivated.

Only if the stepwise read 2200 and check 2300 procedure is successfully completed (i.e., no incompatible technical parameter setting is included in the entire control portion), the cooking apparatus proceeds with loading the respective control portion, either by querying the data storage component and loading the control portion from the data storage component into the load memory portion, or by copying the read buffer to the load memory portion.

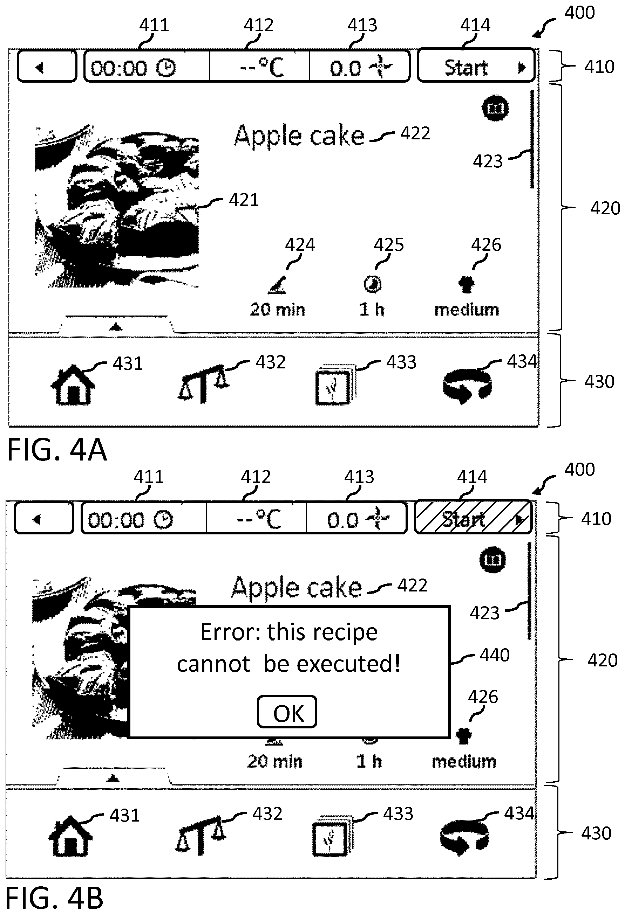

FIGs. 4A, 4B show a user interface 400 in two different states (at t1 and t2) to enable interaction between the cooking apparatus and a user according to one embodiment of the invention. FIG. 4A shows the user interface 400 at time t1 after the overview portion of a particular selected recipe program has been loaded by the cooking apparatus.

In the example, the Ul component of the cooking apparatus renders a graphical user interface which includes three main parts: a status part 410 visualizing technical status parameters of the cooking apparatus, an overview part visualizing the overview portion of the selected recipe program, and a shortcut part 430 visualizing icons representing particular control instructions. In the example embodiment the status part 410 includes a first portion 411 to visualize the cooking time (e.g., elapsed or remaining cooking time). It further includes a second portion 412 to visualize the current temperature measured by a temperature sensor of the cooking apparatus. It further includes a third portion 413 for visualizing the rotational speed of the motor of the cooking apparatus. The status parameters in the example all have their initial values because the selected recipe program has not been started yet. Only the overview potion has been loaded and the content of the overview portion is conveyed to the user in the overview part 420. To initiate execution of the selected recipe program the user can push the start function 414 in the status part 410.

In the example, the overview part 420 conveys to the user the name 422 of the selected recipe program, a picture 421 of the meal to be prepared, the preparation time 242, the overall cooking time 425, and a cooking skill category 426 indicating the skill requirements of the user to prepare the selected recipe. Additional overview information can be available for the user by scrolling with a scroll bar 423. For example, the additional information can include the ingredients of the meal, the history and/or the origin the meal, etc.

In the example, the shortcut part 430 provides some icons which allow the user to quickly navigate to respective function of the cooking apparatus by, for example, touching or clicking on the respective icon. For example, the home icon 431 leads the user to the home menu of the cooking apparatus (e.g., the list of available recipe programs on the data storage device). The scales icon 432 may directly invoke the weighing function of the cooking apparatus. The mode icon 433 may allow the user to switch motor modes. For example, touching the icon may toggle between a predefined number of standard modes for the motor of the cooking apparatus. The reverse mode icon 434 allows the user to reverse the rotational direction of the motor.

Any further function which is useful for the user may be presented with a respective graphical or audio presentation through the Ul component and allow the user to navigate through the various functions or to trigger directly a particular function of the cooking apparatus.

FIG. 4B illustrates the user interface 400 at time t2 after then user indicated the execution of the selected recipe program by interacting with the start function 414. However, in the example the parameter check component recognizes incompatible technical parameter settings in the control portion of the selected recipe program (as disclosed previously) and prevents loading the control portion into the load memory portion of the cooking apparatus. Therefore, the process control component cannot execute the selected recipe program and deactivates the start function 414 (illustrated by the dashed pattern). For example, the start function 414 may be greyed out or completely suppressed. In one embodiment, the cooking apparatus may store an identifier of the rejected recipe program in a list of non-executable recipes. In this embodiment, the respective recipe program can be identified immediately in case the user disconnects and reconnects the cooking apparatus and the recipe data storage and the respective start function can be immediately deactivated without a further parameter check. In an alternative embodiment, the cooking apparatus may simply re-perform the technical parameter check when the user tries to restart the respective recipe program once the data storage is reconnected after having been removed. In this embodiment, the result of the previous checks does not need to be stored. Additionally the user may be notified by an error message 440 that the selected program cannot be executed. An error handling program may provide the user with information about the cause of the error based on the technical status of the cooking apparatus. For example, the error message may simply provide the information, that the selected recipe program could not be read and make a standard suggestion to check the connection between the cooking apparatus and the data storage device. This avoids to reverse-engineer the functioning of recipe programs on the cooking apparatus. In other embodiments, the error message may provide information about the technical parameter settings of the recipe program which caused preventing the control portion to be loaded. Such a detailed error message can support recipe developers in developing new recipe programs which are compatible with technical parameter setting constraints of the cooking apparatus.

FIG. 5 is a simplified example of three different digital recipe control portions 501, 502, 503 leading to different parameter check results according to one embodiment of the invention.

The first control portion 501 includes control instructions instructing a user (e.g., via the display) to place 200 g mixed vegetables (celery stalk, carrots and onions), cut into pieces (step 6). The scales are automatically turned on through the respective code instruction. Similarly, in the next step 7, the user is instructed to add 40 g extra virgin olive oil. In step 8 the cooking apparatus received code instructions to automatically set technical parameters for processing the added ingredients. The time parameter setting is set to 5 minutes, the temperature setting is set to heat the content to 120°C while the motor rotation speed setting is set to speed 2. In step 14, the motor rotation speed setting is increased to speed 5 lasting for 1 minute.

The second control portion 502 is assumed to be identical with the first control portion 501 up to step 8. However, step 8 differs from the step 8 of the first control portion 501 in that the speed setting is replaced by a turbo preset mode setting to prepare the cooking apparatus for the turbo mode.

The third control portion 503 is assumed to be identical with the first control portion 501 up to step 14. However, step 14 differs from the step 14 of the first control portion 501 in that the turbo running mode is enabled with a turbo pulse setting of 1000.

Assuming that the user selects the respective recipe program for execution, the cooking apparatus would read the respective code instructions and apply the CTPSR.

The following code example is an example of a CTPSR set as it may be used in one embodiment of the invention (e.g., the rule set can be applied to the read buffer in the step wise reading approach). The example rule set includes a set of standard rules and one example for a complex rule. A person skilled in the art can design other complex rules based on any combinations of arbitrary technical parameter settings having the same or different types:

```
 eC_Bool CTmCtrlStep::CheckSettings ()
 {
     eC_Bool bSettingsValid = true;
     / / standard rules
     // A valid time settings is between 00:00 and 99:59 it is not
     checked if only the valid time steps are used in this range.
     bSettingsValid &= (m_kSettings.m_uiMinutes <= 99);
     bSettingsValid &= (m_kSettings.m_uiSeconds <= 59);
     // A valid temperature setting is 0 or one of these temperatures
     0, 37, 40, 45, 50, 55, 60, 65, 70, 72, 75, 80, 85, 90, 95, 98, 100, 105, 110, 115, 120, 1
     21.
     eC_Bool bTempValid = false;
     for (eC_UInt i = 0; i <= MAX_TEMP_INDEX; ++i)
     {
          if (m_kSettings.m_uiTemp == TM_Temp[i])
          {
                bTempValid = true;
                break;
          }
     }
     bSettingsValid&= bTempValid;
     // A valid speed is between 0.0 and 10.0 in steps of 0.5 and
     additionaly soft (0.1, 0.2 and 0.3)
     if ((m_kSettings.m_eSpeed < 0) | | (m_kSettings.m_eSpeed > 100)
     | | (m_kSettings.m_eSpeed%5 != 0))
     {
          / / we are outside of the speed range or < 0.5. Check the
          soft speeds.
          if ((m kSettings.m_eSpeed != 1) && (m_kSettings.m_eSpeed !=
          2) && (m_kSettings.m_eSpeed != 3))
          {
                bSettingsValid = false;
          }
     }
     / / Valid motor functions are normal, turbo preset, turbo
     running, dough preset, dough running and automated recipe.
     if ((m_kSettings.m_eMotorFunction != enGUI_MF_NORMAL)
          && (m_kSettings.m_eMotorFunction != enGUI_MF_TURBO_PRESET)
          && (m_kSettings.m_eMotorFunction != enGUI_MF_TURBO_RUNNING)
          && (m_kSettings.m_eMotorFunction != enGUI_MF_DOUGH_PRESET)
          && (m_kSettings.m_eMotorFunction != enGUI_MF_DOUGH_RUNNING)
          && (m_kSettings.m_eMotorFunction !=
          enGUI_MF_AUTOMATEDRECIPE))
     {
          bSettingsValid = false;
     }
     / / a valid setting for the rotation is left or right.
     bSettingsValid &= ((m_kSettings.m_eRotation ==
     enGUI_ROT_RIGHT)
           | | (m_kSettings.m_eRotation == enGUI_ROT_LEFT)) ;
     if (m_kSettings.m_eMotorFunction == enGUI_MF_TURBO_PRESET)
     {
          / / a valid turbo pulse time is 500ms, 1000ms, or 2000ms.
          bSettingsValid &= ((m_kSettings.m_uiTurboImpulseTime == 500)
                | | (m_kSettings.m_uiTurboImpulseTime == 1000)
                | | (m_kSettings.m_uiTurboImpulseTime == 2000));
          / / a valid turbo pulse count is between 1 and 10.
          bSettingsValid&= (m_kSettings.m_uiTurboPulseCount > 0) &&
          (m_kSettings.m_uiTurboPulseCount <= 99);
     }
     else
     {
          bSettingsValid&= (m_kSettings.m_uiTurboImpulseTime == 0);
          bSettingsValid&= (m_kSettings.m_uiTurboPulseCount == 0);
          // a valid time type is 'time indicated on the package',
          'time indicated by User' or 'time range'
          bSettingsValid&= ((m_kSettings.m_eTimeType ==
          CControlSetting::TT_IndicatedOnPackage)
           | | (m_kSettings.m_eTimeType ==
           CControlSetting::TT_IndicatedByeUser)
           | | (m_kSettings.m_eTimeType == CControlSetting::TT_Range)) ;
     }
     return bSettingsValid;
     }
     / / complex rules (combinations of technical parameters of different
     types)
     // a valid turbo mode setting can only be applied when no heating
     occurs at the same time
     if ((m_kSettings.m_eMotorFunction == enGUI_MF_TURBO_PRESET) | |
     (m_kSettings.m_eMotorFunction == enGUI_MF_TURBO_RUNNING))
     {
          if (m_kSettings.m_uiTemp > 0)
          {
                eC_Bool bSettingsValid = false;
          }
     }
...
```

Applying the CTPSR to step 8 of the first control portion 501 results in a valid cooking step because 120 is an allowed temperature setting and speed 2 is a valid motor speed setting. Later on, in step 14 the CTPSR again will result in a valid machine state result because the increase of the speed setting to speed 5 is also allowed according to the above standard rule examples and will result in proper operation of the cooking apparatus.

In the second control portion 502 the application of the standard rules would not lead to a rejection of the recipe program because each parameter setting on its own is allowed. However, the check of step 8 with the complex rule in the above CTPSR will recognize that the cooking apparatus does not allow switching the motor to turbo mode while the cooking apparatus is heating. In the second control portion 502 the incompatible settings are included in the same code instructions. However, incompatible technical parameter settings may also be spread over multiple code instructions as shown in the third control portion 503.

When instead applying the CTPSR to step 14 of the third control portion 503, the parameter check component also detects an incompatible technical parameter setting by applying the above complex rule example. In this case, the complex rule is applied to all previously read control instructions and the parameter check component recognizes that at step 14 (switching to turbo mode) the cooking apparatus is still perfoming the heating operation started in step 8. It is not allowed switching the motor to the turbo mode when the cooking content in the apparatus is heated at 120°C. In other words, the parameter check component in this case detects an incompatibility of the technical parameter settings in the code instructions of the third control portion 503 and the technical constraints of the cooking apparatus as defined by the CTPSR. In this case, the rule relates to a complex parameter setting including a combination of a temperature setting and a motor mode setting. Complex rules/parameter settings can include any arbitrary combination of different types of technical parameter settings which may cause the cooking apparatus to improper operation. As described earlier, the CTPSR in the above example shows a multi-level structure where the standard rules can be seen as first level rules and the complex rules as second or higher level rules. The above complex rule example teaches the skilled person how to include further complex rules which can take into account other dependencies of technical parameters, such as for example, a temperature limit which depends on the ingredients, a motor speed limit which depends on the ingredients, a motor speed limit which depends the ingredients and the temperature of the ingredients, etc.

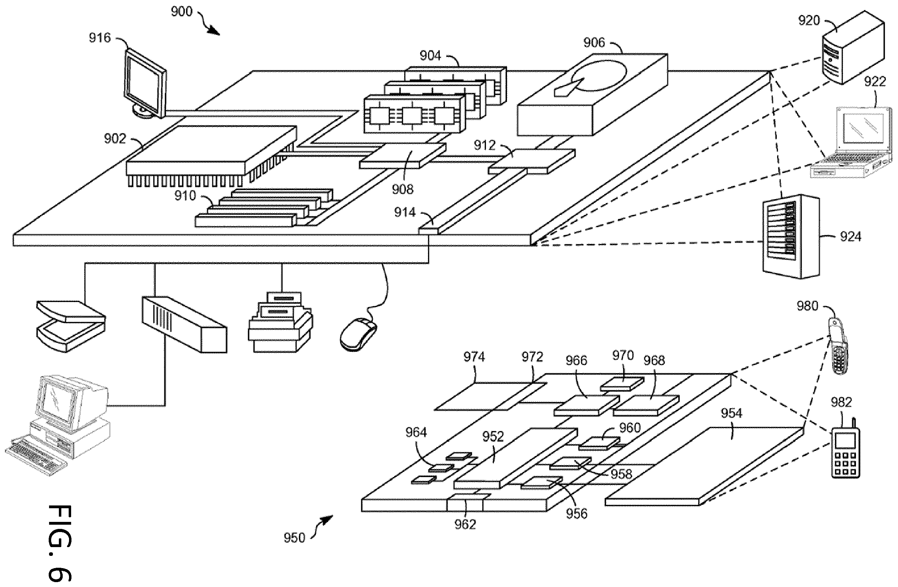

FIG. 6 is a diagram that shows an example of a generic computer device 900 and a generic mobile computer device 950, which may be used with the techniques described here. Computing device 900 may be integrated in the cooking apparatus and is intended to represent various functions of digital computers as they are also used in laptops, desktops, workstations, personal digital assistants, servers, blade servers, mainframes, and other appropriate computers. Computing device 950 is intended to represent various forms of mobile devices, such as personal digital assistants, cellular telephones, smart phones, and other similar computing devices. In the context of this disclosure the computing device 950 may serve as a frontend control device of the cooking computing device 900. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multi-processor system).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high speed controller 908 manages bandwidth-intensive operations for the computing device 900, while the low speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processors. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952, that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

A number of embodiments have been described. Nevertheless, it will be understood that various modifications may be made without departing from the spirit and scope of the invention.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the following claims.

## Claims

1. A multi-function cooking apparatus (100) for at least semi-automated cooking support, comprising:
an interface component (110) configured to access a plurality of recipe programs on a data storage device (200) wherein a particular recipe program (210) comprises a control portion (211) having a plurality of control instructions with at least one technical parameter setting to control cooking steps performed by the cooking apparatus in case of executing the control portion;
at least one memory component (170) configured to load the control portion (211) from the data storage device (200) for executing;
at least one processor component (120) configured to process the control portion (211) for executing when the control portion (211) is loaded into a load memory portion of the memory component (170);
a technical parameter storage component (130) configured to store compatible technical parameter setting rules wherein a compatible technical parameter setting ensures proper operation of the cooking apparatus;
**characterised in that**
a parameter check component (140) configured:
to prevent loading of the control portion (211) into the load memory portion of the memory component (170) if the control instructions include at least one particular technical parameter setting which is incompatible with the compatible technical parameter setting rules; and
to trigger loading of the control portion (211) into the load memory portion for executing if all technical parameter settings of the plurality of control instructions are in compliance with the compatible technical parameter setting rules.

2. The cooking apparatus of claim 1, wherein the parameter check component (140) is further configured:
to stepwise read control instructions of the control portion (211) from the storage component (200);
after each control instruction reading step, to apply the compatible technical parameter setting rules to the previously read control instructions; and
to prevent loading the control portion (211) into the load memory portion if the previously read control instructions include at least one particular technical parameter setting which is incompatible with the compatible technical parameter setting rules.

3. The cooking apparatus of claim 2, wherein the parameter check component (140) uses a read memory portion of the memory component for stepwise reading of control instructions, the read memory portion being isolated from the load memory portion.

4. The cooking apparatus of claim 3, wherein the load memory portion is configured to load the control instructions from the read memory portion.

5. The cooking apparatus of any one of the previous claims, further comprising:
a user interface component (150) configured:
to initiate retrieval of an overview portion (212) of the particular recipe program (210) for outputting content of the overview portion to a cooking user,
to prompt the cooking user to select the particular recipe program for execution of the control portion (211), and
to deactivate the particular recipe program selection if the control instructions include at least one particular technical parameter setting which is incompatible with the compatible technical parameter setting rules.

6. The cooking apparatus of any one of the previous claims, wherein the at least one particular technical parameter setting is selected from the group of: cooking time, rotational speed of a motor of the cooking apparatus, rotational direction of the motor, motor mode, heat control, and pulse mode.

7. The cooking apparatus of any one of the previous claims, wherein supported cooking functions are selected from the group of: weighing, mixing, crushing, milling, kneading, controlled heating, cooking, beating, stirring, emulsifying, and steaming.

8. The cooking apparatus of any one of the previous claims, wherein the compatible technical parameter setting rules combine multiple technical parameter settings of different types.

9. A method (1000) for controlling recipe execution on a multi-function cooking apparatus, comprising:
accessing (1100) a plurality of recipe programs on a data storage device wherein a particular recipe program (210) comprises a control portion (211) having a plurality of control instructions with at least one technical parameter setting to control cooking steps performed by the cooking apparatus in case of executing the control portion;
applying (1300) compatible technical parameter setting rules to the control instructions wherein a compatible technical parameter setting ensures proper operation of the cooking apparatus;
the method **characterised in that** it comprises
preventing (1400) loading of the control portion (211) into a load memory portion of a memory component (170) of the cooking apparatus, if the control instructions include at least one particular technical parameter setting which is incompatible with the compatible technical parameter setting rules; and
loading (1500) of the control portion (211) into the load memory portion for executing (1600) by a processor component of the cooking apparatus, if all technical parameter settings of the plurality of control instructions are in compliance with the compatible technical parameter setting rules.

10. The method of claim 9, further comprising:
stepwise reading (2200) control instructions of the control portion (211) from the storage component (200);
after each control instruction reading step, applying (2300) the compatible technical parameter setting rules to the previously read control instructions; and
preventing (2400) loading the control portion (211) into the load memory portion if the previously read control instructions include at least one particular technical parameter setting which is incompatible with the compatible technical parameter setting rules.

11. The method of claim 10, wherein stepwise reading (1200) comprises:
buffering each read control instruction in a read memory portion of the memory component, the read memory portion being isolated from the load memory portion.

12. The method of any one of the claims 9 to 11, further comprising:
initiating retrieval (2120) of an overview portion of the particular recipe program for outputting content of the overview portion to a cooking user,
prompting (2140) the cooking user to select the particular recipe program for execution of the control portion (211);
deactivating (2420) the particular recipe program selection if the control instructions include at least one particular technical parameter setting which is incompatible with the compatible technical parameter setting rules.

13. The method of any one of the claims 9 to 12, wherein applying (1300) compatible technical parameter setting rules to the control instructions uses a complex technical parameter setting rule which relates to a combination of multiple technical parameter settings of different types.

14. The method of any one of claim 13, wherein the compatible technical parameter setting rules having a hierarchical structure including:
first level rules defining independent ranges for individual technical parameters wherein a particular range defines a particular tolerance interval for a particular individual technical parameter; and
at least second level rules defining allowed dependencies between technical parameter settings of different types.

15. A computer program product for controlling recipe execution on a multi-function cooking apparatus, comprising instructions that when loaded into a memory of the cooking apparatus and being executed by at least one processor of the cooking apparatus cause the cooking apparatus to perform the method steps according to any one of the claims 9 to 14.

## Patentansprüche

1. Multifunktionelle Kochvorrichtung (100) für mindestens halbautomatisierte Kochunterstützung, aufweisend:
eine Schnittstellenkomponente (110), die dazu konfiguriert ist, auf eine Mehrzahl von Rezeptprogrammen auf einer Datenspeichervorrichtung (200) zuzugreifen, wobei ein bestimmtes Rezeptprogramm (210) einen Steueranteil (211) mit einer Mehrzahl von Steueranweisungen mit mindestens einer Einstellung der technischen Parameter zum Steuern von Kochschritten, die von der Kochvorrichtung im Falle der Ausführung des Steueranteils durchgeführt werden, aufweist;
mindestens eine Speicherkomponente (170), die dazu konfiguriert ist, den Steueranteil (211) aus der Datenspeichervorrichtung (200) zum Ausführen zu laden;
mindestens eine Prozessorkomponente (120), die dazu konfiguriert ist, den Steueranteil (211) zum Ausführen abzuarbeiten, wenn der Steueranteil (211) in einen Ladespeicheranteil der Speicherkomponente (170) geladen wird;
eine Speicherkomponente (130) für technische Parameter, die dazu konfiguriert ist, kompatible Einstellungsregeln für die technischen Parameter zu speichern, wobei eine kompatible Einstellung der technischen Parameter einen ordnungsgemäßen Betrieb der Kochvorrichtung sicherstellt;
**dadurch gekennzeichnet, dass**
eine Parameterprüfkomponente (140) dazu konfiguriert ist:
das Laden des Steueranteils (211) in den Ladespeicheranteil der Speicherkomponente (170) zu verhindern, falls die Steueranweisungen mindestens eine bestimmte Einstellung der technischen Parameter enthalten, die nicht mit den kompatiblen Einstellungsregeln für die technischen Parameter vereinbar ist; und
das Laden des Steueranteils (211) in den Ladespeicheranteil zum Ausführen einzuleiten, falls alle Einstellungen der technischen Parameter der Mehrzahl von Steueranweisungen in Übereinstimmung mit den kompatiblen Einstellungsregeln für die technischen Parameter sind.

2. Kochvorrichtung nach Anspruch 1, wobei die Parameterprüfkomponente (140) ferner dazu konfiguriert ist:
Steueranweisungen des Steueranteils (211) aus der Speicherkomponente (200) schrittweise auszulesen;
nach jedem Steueranweisungsleseschritt die kompatiblen Einstellungsregeln für die technischen Parameter auf die zuvor ausgelesenen Steueranweisungen anzuwenden; und
das Laden des Steueranteils (211) in den Ladespeicheranteil zu verhindern, falls die zuvor gelesenen Steueranweisungen mindestens eine bestimmte Einstellung der technische Parameter enthalten, die nicht mit den kompatiblen Einstellungsregeln für die technischen Parameter vereinbar ist.

3. Kochvorrichtung nach Anspruch 2, wobei die Parameterprüfkomponente (140) einen Lesespeicheranteil der Speicherkomponente zum schrittweisen Auslesen von Steueranweisungen verwendet, wobei der Lesespeicheranteil von dem Ladespeicheranteil getrennt ist.

4. Kochvorrichtung nach Anspruch 3, wobei der Ladespeicheranteil dazu konfiguriert ist, die Steueranweisungen aus dem Lesespeicheranteil zu laden.

5. Kochvorrichtung nach einem der vorhergehenden Ansprüche, ferner aufweisend:
eine Benutzerschnittstellenkomponente (150), die dazu konfiguriert ist:
das Abrufen eines Übersichtsanteils (212) des bestimmten Rezeptprogramms (210) zum Ausgeben von Inhalt des Übersichtsanteils an einen Kochbenutzer einzuleiten,
den Kochbenutzer anzuregen, das bestimmte Rezeptprogramm zur Ausführung des Steueranteils (211) auszuwählen, und
die bestimmte Rezeptprogrammauswahl zu deaktivieren, falls die Steueranweisungen mindestens eine bestimmte Einstellung der technischen Parameter enthalten, die nicht mit den kompatiblen Einstellungsregeln für die technischen Parameter vereinbar ist.

6. Kochvorrichtung nach einem der vorhergehenden Ansprüche, wobei die mindestens eine bestimmte Einstellung der technischen Parameter ausgewählt ist aus der Gruppe von: Kochzeit, Drehzahl eines Motors der Kochvorrichtung, Drehrichtung des Motors, Motormodus, Wärmesteuerung und Pulsmodus.

7. Kochvorrichtung nach einem der vorhergehenden Ansprüche, wobei unterstützte Kochfunktionen ausgewählt sind aus der Gruppe von: Wiegen, Mischen, Zerkleinern, Mahlen, Kneten, gesteuertem Erwärmen, Garen, Schlagen, Rühren, Emulgieren und Dünsten.

8. Kochvorrichtung nach einem der vorhergehenden Ansprüche, wobei die kompatiblen Einstellungsregeln für die technischen Parameter mehrere Einstellungen der technischen Parameter verschiedener Arten kombinieren.

9. Verfahren (1000) zum Steuern einer Rezeptausführung auf einer multifunktionalen Kochvorrichtung, aufweisend:
das Zugreifen (1100) auf eine Mehrzahl von Rezeptprogrammen auf einer Datenspeichervorrichtung, wobei ein bestimmtes Rezeptprogramm (210) einen Steueranteil (211) mit einer Mehrzahl von Steueranweisungen mit mindestens einer Einstellung der technischen Parameter zum Steuern von Kochschritten, die von der Kochvorrichtung im Falle der Ausführung des Steueranteils durchgeführt werden, aufweist;
das Anwenden (1300) kompatibler Einstellungsregeln für die technischen Parameter auf die Steueranweisungen, wobei eine kompatible Einstellung der technischen Parameter einen ordnungsgemäßen Betrieb der Kochvorrichtung sicherstellt;
wobei das Verfahren **dadurch gekennzeichnet ist, dass** es aufweist
das Verhindern (1400) des Ladens des Steueranteils (211) in einen Ladespeicheranteil einer Speicherkomponente (170) der Kochvorrichtung, falls die Steueranweisungen mindestens eine bestimmte Einstellung der technischen Parameter enthalten, die nicht mit den kompatiblen Einstellungsregeln für die technischen Parameter vereinbar ist; und
das Laden (1500) des Steueranteils (211) in den Ladespeicheranteil zum Ausführen (1600) durch eine Prozessorkomponente der Kochvorrichtung, falls alle Einstellungen der technischen Parameter der Mehrzahl von Steueranweisungen in Übereinstimmung mit den kompatiblen Einstellungsregeln für die technischen Parameter sind.

10. Verfahren nach Anspruch 9, ferner aufweisend:
das schrittweise Auslesen (2200) von Steueranweisungen des Steueranteils (211) aus der Speicherkomponente (200);
nach jedem Steueranweisungsleseschritt das Anwenden (2300) der kompatiblen Einstellungsregeln für die technischen Parameter auf die zuvor ausgelesenen Steueranweisungen; und
das Verhindern (2400) des Ladens des Steueranteils (211) in den Ladespeicheranteil, falls die zuvor ausgelesenen Steueranweisungen mindestens eine bestimmte Einstellung der technischen Parameter enthalten, die nicht mit den kompatiblen Einstellungsregeln für die technischen Parameter vereinbar ist.

11. Verfahren nach Anspruch 10, wobei das schrittweise Auslesen (1200) aufweist:
das Zwischenspeichern jeder ausgelesenen Steueranweisung in einem Lesespeicheranteil der Speicherkomponente, wobei der Lesespeicheranteil von dem Ladespeicheranteil getrennt ist.

12. Verfahren nach einem der Ansprüche 9 bis 11, das ferner aufweist:
das Einleiten des Abrufens (2120) eines Übersichtsanteils des bestimmten Rezeptprogramms zum Ausgeben von Inhalt des Übersichtsanteils an einen Kochbenutzer,
das Anregen (2140) des Kochbenutzers, das bestimmte Rezeptprogramm zur Ausführung des Steueranteils (211) auszuwählen;
das Deaktivieren (2420) der bestimmten Rezeptprogrammauswahl, falls die Steueranweisungen mindestens eine bestimmte Einstellung der technischen Parameter enthalten, die nicht mit den kompatiblen Einstellungsregeln für die technischen Parameter vereinbar ist.

13. Verfahren nach einem der Ansprüche 9 bis 12, wobei das Anwenden (1300) kompatibler Einstellungsregeln für die technischen Parameter auf die Steueranweisungen eine komplexe Einstellungsregel für die technischen Parameter verwendet, die sich auf eine Kombination mehrerer Einstellungen der technischen Parameter verschiedener Arten bezieht.

14. Verfahren nach einem von Anspruch 13, wobei die kompatiblen Einstellungsregeln für die technischen Parameter eine hierarchische Struktur haben, umfassend:
Regeln der ersten Stufe, die unabhängige Bereiche für individuelle technische Parameter definieren, wobei ein bestimmter Bereich ein bestimmtes Toleranzintervall für einen bestimmten individuellen technischen Parameter definiert; und
Regeln der mindestens zweiten Stufe, die zulässige Abhängigkeiten zwischen Einstellungen der technischen Parameter verschiedener Arten definieren.

15. Computerprogrammprodukt zum Steuern von Rezeptausführung auf einer multifunktionellen Kochvorrichtung, Anweisungen aufweisend, die, wenn sie in einen Speicher der Kochvorrichtung geladen werden und durch mindestens einen Prozessor der Kochvorrichtung ausgeführt werden, bewirken, dass die Kochvorrichtung die Verfahrensschritte nach einem der Ansprüche 9 bis 14 durchführt.

## Revendications

1. Appareil de cuisson multifonctions (100) destiné à servir au moins de support de cuisson semi-automatisé, comprenant :
un composant d'interface (110) configuré pour accéder à une pluralité de programmes de recettes sur un dispositif de mémorisation de données (200) dans lequel un programme de recette particulier (210) comprend une partie de commande (211) comportant une pluralité d'instructions de commande avec au moins un réglage de paramètre technique pour commander les étapes de cuisson exécutées par l'appareil de cuisson en cas d'exécution de la partie de commande ;
au moins un composant de mémoire (170) configuré pour charger la partie de commande (211) du dispositif de mémorisation de données (200) en vue de son exécution ;
au moins un composant de processeur (120) configuré pour traiter la partie de commande (211) à exécuter quand la partie de commande (211) est chargée dans une partie de mémoire de chargement du composant de mémoire (170) ;
un composant de mémorisation de paramètres techniques (130) configuré pour mémoriser des règles de réglage de paramètres techniques compatibles dans lequel un réglage de paramètre technique compatible garantit le fonctionnement correct de l'appareil de cuisson ;
**caractérisé en ce que**
un composant de vérification de paramètres (140) est configuré :
pour empêcher le chargement de la partie de commande (211) dans la partie de mémoire de chargement du composant de mémoire (170) si les instructions de commande incluent au moins un réglage de paramètre technique particulier incompatible avec les règles de réglage de paramètres techniques compatibles ; et
pour déclencher le chargement de la partie de commande (211) dans la partie de mémoire de chargement en vue de son exécution si tous les réglages de paramètres techniques de la pluralité d'instructions de commande sont conformes aux règles de réglage de paramètres techniques compatibles.

2. Appareil de cuisson selon la revendication 1, dans lequel le composant de vérification de paramètres (140) est configuré en outre pour :
lire étape par étape les instructions de commande de la partie de commande (211) du composant de mémorisation (200) ;
après chaque étape de lecture des instructions de commande, appliquer les règles de réglage de paramètres techniques compatibles aux instructions de commande lues précédemment ; et
empêcher le chargement de la partie de commande (211) dans la partie de mémoire de chargement si les instructions de commande lues précédemment comportent au moins un réglage de paramètre technique particulier incompatible avec les règles de réglage de paramètres techniques compatibles.

3. Appareil de cuisson selon la revendication 2, dans lequel le composant de vérification de paramètres (140) utilise une partie de mémoire de lecture du composant de mémoire pour lire étape par étape les instructions de commande, la partie de mémoire de lecture étant distincte de la partie de mémoire de chargement.

4. Appareil de cuisson selon la revendication 3, dans lequel la partie de mémoire de chargement est configurée pour charger les instructions de commande provenant de la partie de mémoire de lecture.

5. Appareil de cuisson selon l'une quelconque des revendications précédentes, comprenant en outre :
un composant d'interface utilisateur (150) configuré pour :
lancer le recouvrement d'une partie de description générale (212) du programme de recette particulier (210) pour présenter le contenu de la partie de description générale à un utilisateur de l'appareil de cuisson,
inciter l'utilisateur de l'appareil de cuisson à sélectionner le programme de recette particulier pour l'exécution de la partie de commande (211), et
désactiver la sélection du programme de recette particulier si les instructions de commande comportent au moins un réglage de paramètre technique particulier incompatible avec les règles de réglage de paramètres techniques compatibles.

6. Appareil de cuisson selon l'une quelconque des revendications précédentes, dans lequel l'au moins un réglage de paramètre technique particulier est sélectionné dans le groupe de : temps de cuisson, vitesse de rotation d'un moteur de l'appareil de cuisson, sens de rotation du moteur, mode du moteur, commande de chaleur, et mode pulsé.

7. Appareil de cuisson selon l'une quelconque des revendications précédentes, dans lequel les fonctions de cuisson prises en charge sont sélectionnées dans le groupe de : pesage, mixage, concassage, broyage, pétrissage, chauffage contrôlé, cuisson, battage, brassage, émulsification et cuisson vapeur.

8. Appareil de cuisson selon l'une quelconque des revendications précédentes, dans lequel les règles de réglage de paramètres techniques compatibles combinent de multiples réglages de paramètres techniques de différents types.

9. Procédé (1000) de commande de l'exécution d'une recette sur un appareil de cuisson multifonctions, comprenant :
l'accès (1100) à une pluralité de programmes de recettes sur un dispositif de mémorisation de données dans lequel un programme de recette particulier (210) comprend une partie de commande (211) comportant une pluralité d'instructions de commande avec au moins un réglage de paramètre technique pour commander les étapes de cuisson exécutées par l'appareil de cuisson en cas d'exécution de la partie de commande ;
l'application (1300) de règles de réglage de paramètres techniques compatibles aux instructions de commande dans lequel un réglage de paramètre technique compatible garantit le fonctionnement correct de l'appareil de cuisson ;
le procédé étant **caractérisé en ce qu'**il comprend :
l'empêchement (1400) du chargement de la partie de commande (211) dans une partie de mémoire de chargement d'un composant de mémoire (170) de l'appareil de cuisson, si les instructions de commande incluent au moins un réglage de paramètre technique particulier incompatible avec les règles de réglage de paramètres techniques compatibles ; et
le chargement (1500) de la partie de commande (211) dans la partie de mémoire de chargement en vue de son exécution (1600) par un composant de processeur de l'appareil de cuisson, si tous les réglages de paramètres techniques de la pluralité d'instructions de commande sont conformes aux règles de réglage de paramètres techniques compatibles.

10. Procédé selon la revendication 9, comprenant en outre :
la lecture étape par étape (2200) des instructions de commande de la partie de commande (211) du composant de mémorisation (200) ;
après chaque étape de lecture des instructions de commande, l'application (2300) des règles de réglage de paramètres techniques compatibles aux instructions de commande lues précédemment ; et
l'empêchement (2400) du chargement de la partie de commande (211) dans la partie de mémoire de chargement si les instructions de commande lues précédemment comportent au moins un réglage de paramètre technique particulier incompatible avec les règles de réglage de paramètres techniques compatibles.

11. Procédé selon la revendication 10, dans lequel la lecture étape par étape (1200) comprend :
la mise en mémoire tampon de chaque instruction de commande lue dans une partie de mémoire de lecture du composant de mémoire, la partie de mémoire de lecture étant distincte de la partie de mémoire de chargement.

12. Procédé selon l'une quelconque des revendications 9 à 11, comprenant en outre :
le lancement du recouvrement (2120) d'une partie de description générale du programme de recette particulier pour présenter le contenu de la partie de description générale à un utilisateur de l'appareil de cuisson,
l'incitation (2140) de l'utilisateur de l'appareil de cuisson à sélectionner le programme de recette particulier pour l'exécution de la partie de commande (211),
la désactivation (2420) de la sélection du programme de recette particulier si les instructions de commande comportent au moins un réglage de paramètre technique particulier incompatible avec les règles de réglage de paramètres techniques compatibles.

13. Procédé selon l'une quelconque des revendications 9 à 12, dans lequel l'application (1300) de règles de réglage de paramètres techniques compatibles aux instructions de commande utilise une règle de réglage de paramètre technique complexe se rapportant à une combinaison de multiples réglages de paramètres techniques de différents types.

14. Procédé selon l'une quelconque de la revendication 13, dans lequel les règles de réglage de paramètres techniques compatibles ont une structure hiérarchique comportant :
un premier niveau de règles définissant des plages indépendantes de paramètres techniques individuels dans lequel une plage particulière définit un intervalle de tolérance particulier pour un paramètre technique individuel particulier ; et
au moins un deuxième niveau de règles définissant des dépendances autorisées entre des réglages de paramètres techniques de différents types.

15. Produit de programme informatique pour commander l'exécution de recettes sur un appareil de cuisson multifonctions, comprenant des instructions qui, à leur chargement dans une mémoire de l'appareil de cuisson et à leur exécution par au moins un processeur de l'appareil de cuisson, amènent l'appareil de cuisson à exécuter les étapes de procédé selon l'une quelconque des revendications 9 à 14.
